# EUROPEAN PATENT APPLICATION

(11) **EP 4 273 273 A1**
(43) Date of publication of application: **08.11.2023**
(21) Application number: 21923204.8
(22) Date of filing: 17.12.2021
(51) Int. Cl.: C21C 5/28, C21C 5/35

(54) **METHOD FOR REFINING MOLTEN IRON**

(30) Priority: 26.01.2021 JP 2021010198
(71) Applicant: JFE Steel Corporation, Tokyo 100-0011 (JP)
(72) Inventor: OGASAWARA, Futoshi, Tokyo 100-0011 (JP); HATTORI, Yudai, Tokyo 100-0011 (JP); YOKOMORI, Rei, Tokyo 100-0011 (JP); KAWABATA, Ryo, Tokyo 100-0011 (JP)
(74) Representative: Hoffmann Eitle
(86) International application number: PCT/JP2021/046712
(87) International publication number: WO 2022/163200

(57) **Abstract**

The present invention proposes a molten iron refining method that prevents a cold iron source from remaining unmelted even under the condition of a high ratio of the cold iron source. In this method, an auxiliary material is added, and an oxidizing gas is supplied, to a cold iron source and molten pig iron that are contained or fed in a converter-type vessel, and molten iron is subjected to a refining process. Prior to the refining process, a pre-charged cold iron source that is charged all at once into the converter-type vessel before the molten pig iron is charged into the converter-type vessel is charged in an amount not larger than 0.15 times the sum of an amount of the pre-charged cold iron source and a charge amount of the molten pig iron, or is not charged. A furnace-top-added cold iron source that is added from a furnace top of the converter-type vessel is fed into the converter-type vessel during the refining process.

## Description

### Technical Field

The present invention relates to a molten iron refining method, and particularly to a technology that allows a larger amount of cold iron source to be used in a refining process of molten iron contained in a converter-type vessel.

### Background Art

A steelmaking method that performs a dephosphorization process at the stage of molten pig iron (hereinafter referred to as a preliminary dephosphorization process) to reduce the concentration of phosphorus in the molten pig iron to some extent and then performs decarburization blowing in a converter has developed so far. In this preliminary dephosphorization process, an oxygen source, such as gaseous oxygen, is added into the molten pig iron along with a lime-based flux, so that the oxygen source reacts with carbon and silicon in addition to reacting with the phosphorus in the molten pig iron and thereby raises the temperature of the molten pig iron. Since lower temperatures are thermodynamically advantageous for the dephosphorization reaction, the post-process temperature of the molten pig iron is controlled to around 1300°C to 1400°C through addition of a cooling material.

In recent years, from the viewpoint of preventing global warming, the steel industry has also been promoting efforts to reduce CO₂ gas emission by cutting down on fossil fuel consumption. At integrated iron mills, molten pig iron is manufactured by reducing iron ore with carbon. Manufacturing this molten pig iron requires about 500 kg of carbon source per ton of molten pig iron to reduce iron ore and other processes. On the other hand, manufacturing molten steel using a cold iron source, such as iron scrap, as a raw material in converter refining does not require a carbon source that is needed to reduce iron ore. In this case, with the energy required to melt the cold iron source taken into account, replacing one ton of molten pig iron with one ton of cold iron source leads to a reduction of about 1.5 tons of CO₂ gas emission. Thus, in a converter steelmaking method using molten iron, increasing the mixing ratio of the cold iron source leads to a reduction of the CO₂ emission. Here, molten iron refers to molten pig iron and a melted cold iron source.

The end temperature of the aforementioned preliminary dephosphorization process is about 1300 to 1400°C, which is a temperature lower than the melting point of iron scrap used as the cold iron source. In preliminary dephosphorization blowing, therefore, carbon contained in the molten pig iron is diffused into a surface part of the iron scrap, so that the melting point of the carburized part decreases and melting of the iron scrap progresses. Thus, promoting the mass transfer of carbon contained in the molten pig iron is essential in promoting melting of the iron scrap. When the processing vessel in which the preliminary dephosphorization process is performed is a ladle or a torpedo car, not only is there a limit to increasing the speed of mass transfer of carbon due to weak stirring but also a lance is immersed in the molten pig iron, which poses restrictions on the shape and amount of scrap to be used. A converter-type furnace, on the other hand, has a high bottom-blowing stirring force and does not have a lance immersed, and therefore is advantageous in melting scrap.

For example, Patent Literature 1 proposes a technology that promotes stirring of molten pig iron inside a converter through a supply of a bottom-blown gas and thereby promotes melting of a cold iron source.

Further, Patent Literature 2 proposes a method in which, to perform a dephosphorization process on molten pig iron using a converter-type furnace having a top- and bottom-blowing function, all or part of scrap is added from the furnace top to the molten pig iron during a blowing step, and the timing of adding the scrap to be added during the blowing step is specified to be within the first half of the period of the blowing step.

### Citation List

### Patent Literature

Patent Literature 1: JP-S63-169318A
Patent Literature 2: JP-2005-133117A

### Summary of Invention

### Technical Problem

However, these conventional technologies have the following problems.

As described above, melting of iron scrap as a cold iron source progresses as the carbon concentration in the surface part thereof increases and the melting point decreases due to carburization. In this case, the lower the temperature of the molten pig iron, the higher the concentration of carbon in the carburized part of the iron scrap surface needs be. Thus, carburization requires time, so that melting the iron scrap takes time. In particular, when the temperature of the molten pig iron near the iron scrap has decreased to about the solidification temperature of the molten pig iron, carburization until the carbon concentration in the surface layer of the iron scrap becomes comparable to the carbon concentration in the molten pig iron is required, which causes significant stagnation in melting. Therefore, increasing the stirring force as described in Patent Literature 1 has little promoting effect on melting of the cold iron source.

When a cold iron source and molten pig iron are charged into a converter, the temperature of the molten pig iron decreases due to the sensible heat of the cold iron source, and the temperature of the molten iron inside the furnace remains around the solidification temperature of the molten iron during a period until the cold iron source inside the furnace melts completely in the first half of the dephosphorization process. When the mixing ratio of the cold iron source is increased, the temperature of the molten iron inside the furnace remains around the solidification temperature of the molten iron for a longer time.

The method described in Patent Literature 2 can avoid stagnation in melting of the cold iron source due to a decrease in temperature of the molten iron during the first half of the dephosphorization process. However, there is a concern that, unless fed during the first half of the blowing step, the cold iron source may not melt completely during the blowing time and remain unmelted. Thus, the amount of cold iron source that can be fed within the practical blowing time is limited, and the mixing ratio of the cold iron source is limited to about 10%. In fact, Patent Literature 2 says that when a desiliconization process was performed using a 300-ton converter-type vessel with the blowing time set to 10 to 12 minutes, the lowest mixing ratio of molten pig iron was 90.9% (i.e., the mixing ratio of a cold iron source was 9.1%). Under conditions where the mixing ratio of the cold iron source is further increased, the amount of cold iron source to be fed from the furnace top during the first half of the dephosphorization process becomes too large and the temperature of the molten iron during the first half of the dephosphorization process becomes lower. As a result, the cold iron source remains unmelted.

Having been contrived in view of these circumstances, the present invention aims to propose a molten iron refining method that prevents a cold iron source from remaining unmelted even under the condition of a high mixing ratio of the cold iron source, and that is also effective particularly for a molten iron dephosphorization refining process that is a low-temperature process.

### Solution to Problem

A first molten iron refining method according to the present invention that advantageously solves the above-described problems is a method in which an auxiliary material is added, and an oxidizing gas is supplied, to a cold iron source and molten pig iron that are contained or fed in a converter-type vessel, and molten iron is subjected to a refining process. Prior to the refining process, a pre-charged cold iron source that is charged all at once into the converter-type vessel before the molten pig iron is charged into the converter-type vessel is charged in an amount not larger than 0.15 times the sum of an amount of the pre-charged cold iron source and a charge amount of the molten pig iron, or is not charged. A furnace-top-added cold iron source that is added from a furnace top of the converter-type vessel is fed into the converter-type vessel during the refining process. The first molten iron refining method according to the present invention could be a preferable solution when the longest dimension of the furnace-top-added cold iron source is not larger than 100 mm.

A second molten iron refining method according to the present invention that advantageously solves the above-described problems is the first molten iron refining method in which the refining process is a decarburization process of molten iron. The second molten iron refining method according to the present invention could be a preferable solution when the refining process is a decarburization process that is performed with a converter-type vessel in which molten pig iron dephosphorized beforehand is charged.

A third molten iron refining method according to the present invention that advantageously solves the above-described problems is the first molten iron refining method in which the refining process is a dephosphorization process of molten iron. The third molten iron refining method according to the present invention could be a more preferable solution when one or both of the following conditions are met: that the concentration of carbon contained in the furnace-top-added cold iron source is not lower than 0.3 mass%, and that the temperature of the molten iron upon completion of the dephosphorization process is not lower than 1380°C.

A fourth molten iron refining method according to the present invention that advantageously solves the above-described problems is the first molten iron refining method in which: the refining process is a dephosphorization-decarburization process in which a molten iron dephosphorization step, an intermediate slag removal step, and a molten iron decarburization step are performed as a series of processes in the same converter-type vessel; prior to the molten iron dephosphorization step, the pre-charged cold iron source is charged in an amount not larger than 0.15 times the sum of an amount of the pre-charged cold iron source and a charge amount of the molten pig iron, or is not charged; and the furnace-top-added cold iron source is fed into the converter-type vessel during one or both of the molten iron dephosphorization step and the molten iron decarburization step. The fourth molten iron refining method according to the present invention could be a more preferable solution when one or both of the following conditions are met: that the concentration of carbon contained in the furnace-top-added cold iron source that is added during the molten iron dephosphorization step is not lower than 0.3 mass%, and that the temperature of the molten iron upon completion of the molten iron dephosphorization step is not lower than 1380°C.

### Advantageous Effects of Invention

According to the present invention, an upper limit is set for the amount of cold iron source to be charged before the start of a molten iron refining process in a converter-type vessel that is part of a total amount of cold iron source (an amount of all cold iron source) to be used for the refining process, and the cold iron source is added from the furnace top at a stage where the temperature of the molten iron has risen sufficiently. Thus, the time for which the temperature of the molten iron remains low at an initial stage of the refining process can be shortened, and even under the condition where the ratio of the amount of all cold iron source to the charge amount of molten pig iron is increased, stagnation in melting of the cold iron source can be prevented. Even in the case where the cold iron source is fed from the furnace top at a stage where the temperature of the molten iron has risen sufficiently, i.e., during the latter half of blowing, a cold iron source, such as reduced iron, containing carbon at a ratio of 0.3 mass% or higher has a low melting point and melts quickly compared with scrap and thus can be prevented form remaining unmelted. Or controlling the post-dephosphorization temperature to 1380°C or higher can prevent the cold iron source from remaining unmelted.

### Brief Description of Drawings

FIG. 1 is a schematic vertical sectional view showing an overview of a converter-type vessel used in an embodiment of the present invention.
FIG. 2 is a schematic view showing a flow of a molten iron refining process according to the embodiment of the present invention.

### Description of Embodiments

An embodiment of the present invention will be specifically described below. The drawings are schematic and may differ from the reality. The following embodiment illustrates a device and a method for implementing the technical idea of the present invention, and is not intended to limit the configuration to the one described below. That is, various changes can be made to the technical idea of the present invention within the technical scope described in the claims.

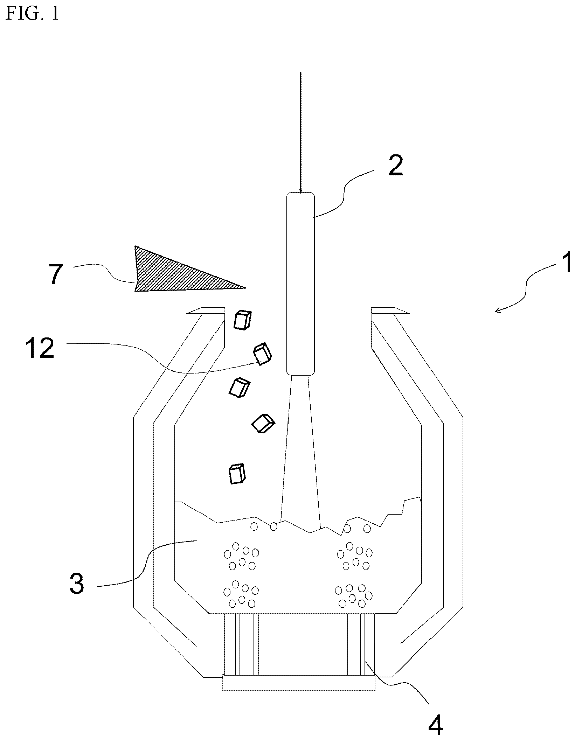

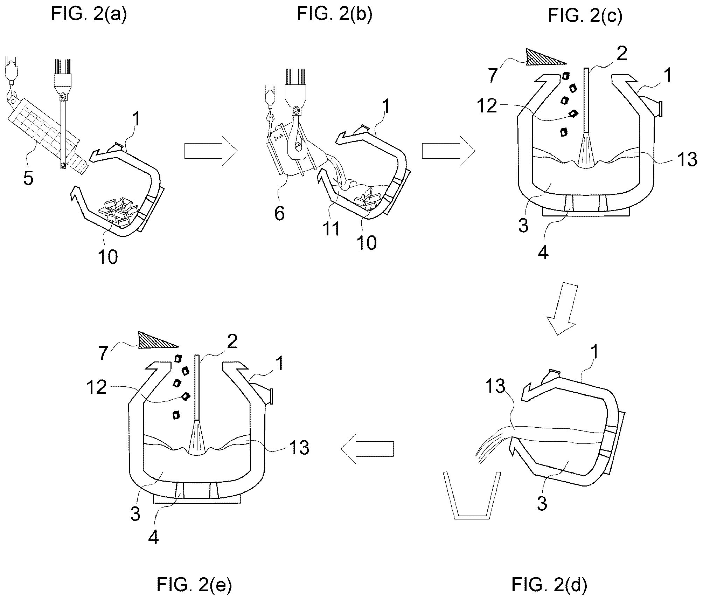

FIG. 1 is a schematic vertical sectional view of a converter-type vessel 1 having a top- and bottom-blowing function that is used for a molten iron refining method of one embodiment of the present invention. FIG. 2 is a schematic view showing a flow of the method of the embodiment.

For example, in FIG. 2 (a), first, iron scrap 10 as a cold iron source to be pre-deposited inside a furnace is charged into the converter-type vessel 1 through a scrap chute 5. Then, in FIG. 2 (b), molten pig iron 11 is charged into the converter-type vessel 1 using a charging ladle 6. The amount of cold iron source charged through the scrap chute 5 is set to an amount not larger than 0.15 times the sum of the amount of the cold iron source and a charge amount of the molten pig iron, or the cold iron source is not pre-charged. A cold iron source 12 to be fed from the furnace top is prepared in a furnace-top hopper 7. As the cold iron source 12 to be fed from the furnace top, iron scrap with small diameters (loose scrap), cut iron scrap (chopped scrap, shredded scrap), small lumps of reduced iron, etc. can be used. It is desirable that iron scrap, lumps of reduced iron, etc. of a large size be processed to a size with a longest dimension not larger than 100 mm (a size that fits in a box with internal dimensions of 100 mm × 100 mm × 100 mm) by cutting, crushing, etc. such that they can be handled by a furnace-top hopper 7 and conveyance equipment, such as a conveyor.

In FIG. 2 (c), after the molten pig iron is charged, an oxygen gas is top-blown toward molten iron 3 through a lance 2 for top-blowing an oxidizing gas. An inert gas, such as N₂, is supplied as a stirring gas through a tuyere 4 installed at the bottom of the furnace to stir the molten iron 3. Auxiliary materials, such as a heating agent and a slag forming agent, are added, and the molten iron 3 inside the converter-type vessel 1 is subjected to a dephosphorization process. As the oxidizing gas, other than pure oxygen, a mixed gas of oxygen and CO₂ or an inert gas can be used.

In FIG. 2 (c), a cold iron source 12 is fed from the furnace top at a timing when scrap 10 having been charged through a scrap chute 5 melts and the temperature of the molten iron starts to rise as the dephosphorization process progresses. Here, when a cold iron source 12, such as reduced iron, containing carbon at a ratio of 0.3 mass % or higher is used, the cold iron source, even when fed during the latter half of the dephosphorization process, can be prevented from remaining unmelted. Also when scrap that does not contain carbon or has a low content of carbon is fed from the furnace top, controlling the post-dephosphorization temperature of the molten iron to 1380°C or higher can prevent the cold iron source from remaining unmelted. After completion of the dephosphorization process, discharge of the molten iron 3 or intermediate slag removal of slag 13 (FIG. 2 (d)) is performed, and a decarburization process (FIG. 2 (e)) is performed. It is also possible to feed the cold iron source 12 from the furnace top during the decarburization process.

The above-described example has shown the molten iron refining method that charges and feeds a cold iron source during a dephosphorization process and subsequently performs a decarburization process. However, the present invention is also applicable to a molten iron refining process that performs only a decarburization process independently, and to a molten iron refining method that performs a decarburization process on molten pig iron having been dephosphorized beforehand. The present invention can of course be applied to a molten iron refining method that performs only a dephosphorization process independently. In addition, intermediate slag removal of the slag may be performed upon completion of desiliconization in the dephosphorization process. In the case where the refining process in this embodiment is a dephosphorization-decarburization process in which a molten iron dephosphorization step, an intermediate slag removal step, and a molten iron decarburization step are performed as a series of processes in the same converter-type vessel, the timing of adding the furnace-top-added cold iron source from the furnace top of the converter-type vessel is during the period of so-called blowing in which an oxidizing gas is supplied into the furnace in the dephosphorization step or the decarburization step. That is, a period after completion of the dephosphorization step until supply of the oxidizing gas is temporarily stopped and the decarburization step is started, and a period during intermediate slag removal are excluded.

As has been described above, the method of this embodiment can prevent the cold iron source from remaining unmelted with a refining process time of about 10 to 20 minutes that is a practical process time of the dephosphorization step or the decarburization step. Since the cold iron source is fed from the furnace top, the number of times of feeding through the scrap chute becomes once per charge. Thus, the material flow does not become complicated, neither does the process time increase excessively due to the additional feeding during the refining process.

While the above-described example has been described based on the example of a top- and bottom-blowing converter, the method can also be used for refining in an oxygen bottom-blowing converter that does not have a top-blowing lance.

The molten pig iron is not limited to molten pig iron discharged from a blast furnace. The present invention is applicable as well also when the molten pig iron is molten pig iron obtained by a cupola, an induction melting furnace, an arc furnace, etc., or is molten pig iron obtained by mixing such molten pig iron with molten pig iron discharged from a blast furnace.

### Examples

### (Example 1)

Using molten pig iron discharged from a blast furnace and a cold iron source (scrap), a dephosphorization process was performed in a 330-ton-capacity top- and bottom-blowing converter (with an oxygen gas top-blown and an argon gas bottom-blown). The amount of molten pig iron, the amount of cold iron source fed through the scrap chute, and the amount of cold iron source fed from the furnace top were changed to various amounts. Scrap was used as the cold iron source fed through the scrap chute, and cut scrap or reduced iron was used as the cold iron source added from the furnace top, with the cold iron source having a carbon concentration of 0.10 to 0.80 mass %. The post-dephosphorization temperature was changed from 1350 to 1385°C. A blowing time in the dephosphorization process that is a refining time was 11 to 12 minutes. The result is shown in Table 1.

**[Table 1]**

| No. | Pre-charge | | | Furnace-top addition | | Post-dephosphorization | | Ratio of all cold iron source | Refining time | Remarks |
|---|---|---|---|---|---|---|---|---|---|---|
| | Amount of molten pig iron | Amount of cold iron source | Ratio of cold iron source | Amount of cold iron source | Carbon concentration | Molten iron temperature | Cold iron source | | | |
| | t | t | % | t | mass% | °C | Unmelted/Melted | % | min | |
| 1 | 297 | 33 | 10.0 | 0 | - | 1350 | Melted | 10.0 | 12 | Comparative Example |
| 2 | 284 | 46 | 13.9 | 0 | - | 1350 | Melted | 13.9 | 11 | Comparative Example |
| 3 | 277 | 53 | 16.1 | 0 | - | 1350 | Unmelted | 16.1 | 12 | Comparative Example |
| 4 | 264 | 66 | 20.0 | 0 | - | 1350 | Unmelted | 20.0 | 11 | Comparative Example |
| 5 | 264 | 46 | 14.8 | 20 | 0.10 | 1350 | Melted | 20.0 | 11 | Invention Example |
| 6 | 264 | 46 | 14.8 | 20 | 0.25 | 1350 | Melted | 20.0 | 11 | Invention Example |
| 7 | 248 | 43 | 14.8 | 39 | 0.32 | 1350 | Melted | 25.0 | 11 | Invention Example |
| 8 | 248 | 43 | 14.8 | 39 | 0.80 | 1350 | Melted | 25.0 | 12 | Invention Example |
| 9 | 264 | 46 | 14.8 | 20 | 0.10 | 1375 | Melted | 20.0 | 12 | Invention Example |
| 10 | 248 | 43 | 14.8 | 39 | 0.10 | 1385 | Melted | 25.0 | 11 | Invention Example |

In Tests No. 1 to 4, all the scrap as the cold iron source was charged into the converter through the scrap chute before the molten pig iron was charged, and the dephosphorization process was performed. As a result, under the conditions where the amount of scrap relative to the total charge amount (molten pig iron + scrape) ("ratio of cold iron source" in the column "pre-charge" in Table 1; hereinafter referred to as "ratio of cold iron source") exceeded 15%, i.e., where the amount of scrap charged into the converter before the molten pig iron was charged exceeded 0.15 times the sum of the charge amount of the molten pig iron and the charge amount of the scrap, the scrap remained unmelted.

In Tests No. 5 to 10, a cold iron source to be charged through the scrap chute before the molten pig iron was charged was charged in an amount that was not larger than 15% as a ratio to the sum of the amount of cold iron source and the charge amount of the molten pig iron (ratio of cold iron source), and then the molten pig iron was charged and the dephosphorization process was started. During the dephosphorization process, cut scrap or reduced iron was continuously fed from the furnace top at a feeding speed within a range of 5 to 20 t/min, from a timing when 30% of a planned process time of the dephosphorization process elapsed. As a result, there was no cold iron source remaining unmelted after the dephosphorization process. In Tests No. 5 to 8, the concentration of carbon in the cold iron source fed from the furnace top was changed from 0.1 mass% to 0.8 mass%. As a result, with the concentration of carbon 0.3 mass% or higher (No. 7 and 8), the cold iron source was prevented from remaining unmelted even when the ratio of all cold iron source was higher. Here, the ratio of all cold iron source is the percentage of the mass of the cold iron source to the mass of the entire iron source including charged or fed molten pig iron.

In Tests No. 9 and 10, a cold iron source to be charged through the scrap chute before the molten pig iron was charged was charged in an amount that was not larger than 15% as a ratio to the sum of the amount of cold iron source and the charge amount of the molten pig iron (ratio of cold iron source), and then the molten pig iron was charged and the dephosphorization process was started. During the dephosphorization process, cut scrap in an amount corresponding to the difference from a planned charge amount of all cold iron source was continuously fed from the furnace top at a feeding speed of 5 to 20 t/min, from a timing when 30% of a planned process time of the dephosphorization process elapsed. The concentration of carbon in the cut scrap was 0.1 mass %. When the post-dephosphorization temperature of the molten pig iron was not lower than 1380°C (Test No. 10), a further increase in the ratio of all cold iron source was achieved.

### (Example 2)

The dephosphorization process was performed under the same conditions as in Example 1. In Tests No. 11 to 13, a cold iron source to be charged through the scrap chute before the molten pig iron was charged was charged in an amount that was not larger than 15% as a ratio to the sum of the amount of cold iron source and the charge amount of the molten pig iron (ratio of cold iron source), i.e., the amount of scrap to be charged into the converter before the molten pig iron was charged was set to be not larger than 0.15 times the sum of the charge amount of the molten pig iron and the charge amount of the scrap, and then the molten pig iron was charged and the dephosphorization process was started. During the dephosphorization process, reduced iron was continuously fed from the furnace top at a feeding speed of 5 to 20 t/min, from a timing when 30% of a planned process time of the dephosphorization process elapsed. The concentration of carbon in the reduced iron was 0.5 mass%. The post-dephosphorization temperature was controlled to 1350°C. A blowing time of the dephosphorization process that is the refining time was 11 to 12 minutes. As a result of changing the dimensions of the reduced iron to various values, the result shown in Table 2 was obtained. Setting the longest dimension to 100 mm or smaller allowed the reduced iron to be stably fed from the furnace top without causing a trouble in a conveyance system, such as a conveyor.

**[Table 2]**

| No. | Pre-charge | | Furnace-top addition | | Post-dephosphorization | | Any trouble in conveyance system | Refining time | Remarks |
|---|---|---|---|---|---|---|---|---|---|
| | Amount of molten pig iron | Amount of cold iron source | Amount of cold iron source | Dimensions of cold iron source | Molten iron temperature | Cold iron source | | | |
| | t | t | t | mm×mm×mm | °C | Unmelted /Melted | | min | |
| 11 | 264 | 46 | 20 | 150×150×150 | 1350 | Melted | Yes | 12 | Invention Example |
| 12 | 264 | 46 | 20 | 110×110×110 | 1350 | Melted | Yes | 11 | Invention Example |
| 13 | 264 | 46 | 20 | 90×90×90 | 1350 | Melted | No | 12 | Preferable example |

### (Example 3)

Using molten pig iron discharged from a blast furnace and a cold iron source (scrap), a decarburization process was performed in a 330-ton-capacity top- and bottom-blowing converter (with an oxygen gas top-blown and an argon gas bottom-blown). The amount of molten pig iron, the amount of cold iron source fed through the scrap chute, and the amount of cold iron source fed from the furnace top were changed to various values. Scrap was used as the cold iron source fed through the scrap chute. Cut scrap or reduced iron was used as the cold iron source added from the furnace top, and was continuously fed from the furnace top at a feeding speed of 5 to 20 t/min, from a timing when 30% of a planned process time of the decarburization process elapsed. The carbon concentration was 0.10 mass%. The post-decarburization temperature was 1650°C. A blowing time of the decarburization process that is the refining time was 17 to 18 minutes. The result is shown in Table 3. When the present invention was applied, no cold iron source remained unmelted.

**[Table 3]**

| No. | Pre-charge | | | Furnace-top addition | | Post-decarburization | | Cold iron source | Refining time | Remarks |
|---|---|---|---|---|---|---|---|---|---|---|
| | Amount of molten pig iron | Amount of cold iron source | Ratio of cold iron source | Amount of cold iron source | Carbon concentration | Molten iron temperature | Ratio of all cold iron source | | | |
| | t | t | % | t | mass% | °C | % | Unmelted/ Melted | min | |
| 14 | 264 | 46 | 14.8 | 20 | 0.10 | 1650 | 20.0 | Melted | 17 | Invention Example |
| 15 | 248 | 43 | 14.8 | 39 | 0.10 | 1650 | 25.0 | Melted | 18 | Invention Example |

### (Example 4)

Using molten pig iron discharged from a blast furnace and a cold iron source (scrap), a dephosphorization process was performed and, after intermediate slag removal, decarburization blowing was performed in a 330-ton-capacity top- and bottom-blowing converter (with an oxygen gas top-blown and an argon gas bottom-blown). The amount of molten pig iron, the amount of cold iron source fed through the scrap chute, and the amount of cold iron source fed from the furnace top were changed to various values. Scrap was used as the cold iron source fed through the scrap chute. Cut scrap or reduced iron was used as the cold iron source added from the furnace top, and was continuously fed from the furnace top at a feeding speed of 5 to 20 t/min, from a timing when 30% of a planned process time of each of the dephosphorization process and the decarburization process elapsed. The carbon concentration was 0.10 to 0.32 mass%. The post-dephosphorization temperature was changed from 1350 to 1380°C. The process time of the dephosphorization step was seven to eight minutes, and the process time of the decarburization step was 10 to 11 minutes. The result is shown in Tables 4-1 and 4-2.

**[Table 4-1]**

| No. | Dephosphorization step | | | | | | |
|---|---|---|---|---|---|---|---|
| | Pre-charge | | | Furnace-top addition | | Post-process | Process time |
| | Amount of molten pig iron | Amount of cold iron source | Ratio of cold iron source | Amount of cold iron source | Carbon concentration | Molten iron temperature | |
| | t | t | % | t | mass% | °C | min |
| 16 | 248 | 43 | 14.8 | 16 | 0.10 | 1350 | 8 |
| 17 | 248 | 43 | 14.8 | 16 | 0.25 | 1350 | 7 |
| 18 | 231 | 40 | 14.8 | 36 | 0.32 | 1350 | 8 |
| 19 | 248 | 43 | 14.8 | 16 | 0.10 | 1375 | 8 |
| 20 | 231 | 40 | 14.8 | 36 | 0.10 | 1380 | 7 |

**[Table 4-2]**

| No. | Decarburization step | | | | Cold iron source | Ratio of all cold iron source | Remarks |
|---|---|---|---|---|---|---|---|
| | Furnace-top addition | | Post-process | Process time | | | |
| | Amount of cold iron source | Carbon concentration | Molten iron temperature | | | | |
| | t | mass% | °C | min | Unmelted/Melted | % | Invention Example |
| 16 | 23 | 0.10 | 1650 | 11 | Melted | 25.0 | Invention Example |
| 17 | 23 | 0.10 | 1650 | 10 | Melted | 25.0 | Invention Example |
| 18 | 23 | 0.10 | 1650 | 10 | Melted | 30.0 | Invention Example |
| 19 | 23 | 0.10 | 1650 | 11 | Melted | 25.0 | Invention Example |
| 20 | 23 | 0.10 | 1650 | 11 | Melted | 30.0 | Invention Example |

When the present invention was applied, no cold iron source remained unmelted. Under the conditions where the concentration of carbon contained in the cold iron source fed from the furnace top during dephosphorization blowing was 0.3 mass% or higher, or where the post-dephosphorization temperature was not lower than 1380°C, an even higher ratio of all cold iron source was achieved.

While examples in which a refining process is performed in a converter-type vessel using molten pig iron discharged from a blast furnace and a cold iron source (scrap etc.) have been shown in the above-described Examples, it has been confirmed that the present invention is applicable as well also when the molten pig iron is molten pig iron obtained by a cupola, an induction melting furnace, an arc furnace, etc., or is molten pig iron obtained by mixing such molten pig iron with molten pig iron discharged from a blast furnace.

### Industrial Applicability

The molten iron refining method of the present invention cam prevent a cold iron source from remaining unmelted even under the condition of a high ratio of the cold iron source and thereby contributes to reducing greenhouse gases, which makes this method useful for industrial purposes.

### Reference Signs List

- 1: Converter-type vessel
- 2: Top-blowing lance for oxidizing gas
- 3: Molten iron
- 4: Bottom-blowing tuyere
- 5: Scrap chute
- 6: Charging ladle
- 7: Furnace-top hopper
- 10: Pre-charged scrap
- 11: Molten pig iron
- 12: Furnace-top-added cold iron source
- 13: Slag

## Claims

1. A molten iron refining method in which an auxiliary material is added, and an oxidizing gas is supplied, to a cold iron source and molten pig iron that are contained or fed in a converter-type vessel, and molten iron is subjected to a refining process,
**characterized in that**:
prior to the refining process, a pre-charged cold iron source that is charged all at once into the converter-type vessel before the molten pig iron is charged into the converter-type vessel is charged in an amount not larger than 0.15 times a sum of an amount of the pre-charged cold iron source and a charge amount of the molten pig iron, or is not charged; and
a furnace-top-added cold iron source that is added from a furnace top of the converter-type vessel is fed into the converter-type vessel during the refining process.

2. The molten iron refining method according to claim 1, wherein a longest dimension of the furnace-top-added cold iron source is not larger than 100 mm.

3. The molten iron refining method according to claim 1 or claim 2, wherein the refining process is a decarburization process of molten iron.

4. The molten iron refining method according to claim 3, wherein the refining process is a decarburization process that is performed with a converter-type vessel in which molten pig iron dephosphorized beforehand is charged.

5. The molten iron refining method according to claim 1 or claim 2, wherein the refining process is a dephosphorization process of molten iron.

6. The molten iron refining method according to claim 5, wherein one or both of the following conditions are met: that the concentration of carbon contained in the furnace-top-added cold iron source is not lower than 0.3 mass%, and that the temperature of the molten iron upon completion of the dephosphorization process is not lower than 1380°C.

7. The molten iron refining method according to claim 1 or claim 2, wherein:
the refining process is a dephosphorization-decarburization process in which a molten iron dephosphorization step, an intermediate slag removal step, and a molten iron decarburization step are performed as a series of processes in the same converter-type vessel;
prior to the molten iron dephosphorization step, the pre-charged cold iron source is charged in an amount not larger than 0.15 times a sum of an amount of the pre-charged cold iron source and a charge amount of the molten pig iron, or is not charged; and
the furnace-top-added cold iron source is fed into the converter-type vessel during one or both of the molten iron dephosphorization step and the molten iron decarburization step.

8. The molten iron refining method according to claim 7, wherein one or both of the following conditions are met: that the concentration of carbon contained in the furnace-top-added cold iron source that is added during the molten iron dephosphorization step is not lower than 0.3 mass%, and that the temperature of the molten iron upon completion of the molten iron dephosphorization step is not lower than 1380°C.
